# EUROPEAN PATENT APPLICATION

(11) **EP 0 786 374 A1**
(43) Date of publication of application: **30.07.1997**
(21) Application number: 97200195.2
(22) Date of filing: 24.01.1997
(51) Int. Cl.: B60P 1/44

(54) **Fixing unit for a lifting device applicable to the rear of the longitudinal members of a vehicle frame**

(30) Priority: 26.01.1996 IT MI960138
(71) Applicant: Nelzi, Giampaolo, 22070 Appiano Gentile (Como) (IT)
(72) Inventor: Nelzi, Giampaolo, 22070 Appiano Gentile (Como) (IT)
(74) Representative: Zanardo, Giovanni

(57) **Abstract**

In order to rationalize the application of lifting devices to the longitudinal members (2) of the vehicle frame, independently of whether they are of the one-piece platform or folding platform type, the fixing unit (1-1C) comprises for each shaped longitudinal member (2) of the frame a connection element (15, 17) comprising:
- upperly an upper flange (15) fixable to the lower flat horizontal portion (5) of the longitudinal member (2) in such a manner as to face the lower surface (12) of said lower flat horizontal portion (5), by a pair of opposing upper gibs (16) which face the pair of upper surfaces (8, 9) of said lower flat horizontal portion (5);
- centrally an intermediate flat flange (17, 17A, 17AA) fixed perpendicularly to the upper flange (15) such that the plane of symmetry (18, 18A, 18AA) of said intermediate flat flange (17, 17A, 17AA)) is spaced from the axis of symmetry (19) of the shaped longitudinal member (2) by a desired distance (d, d1, d2);
- lowerly a concave housing (20) arranged to house the beam (3, 3A) of the lifting device and means (24-25, 28) for locking said beam (3, 3A) in the desired position, (Figure 2).

## Description

This invention relates to a fixing unit for a lifting device applicable to the rear of the longitudinal members of a vehicle frame. More particularly, the fixing unit of the invention is of the type designed to enable the beam which in said lifting devices supports the linkages and actuators, to be fixed to the parallel longitudinal members of a vehicle frame. Each longitudinal member comprises at least one lower flat horizontal portion which is fixed along its centre line to the remaining parts of the longitudinal member, to create a pair of upper surfaces bounded externally by upper parallel edges and a lower surface bounded by the lower parallel edges

The beam of the lifting device can be either of round or of parallelogram cross-section.

In view of the aforesaid configurations of the lifting devices and of the vehicle frame, the fixing unit (which is preferably of box structure) is currently constructed each time by craftsmen, mainly for the following reasons:
- the distance between the longitudinal members is never constant and is rarely equal to the nominal distance scheduled by the vehicle manufacturer;
- the lifting device to be applied can be of the one-piece platform or folding platform type.

It is evident that construction by craftsmen is particularly costly, especially the larger the number of fixing units to be formed.

The object of the present invention is to obviate as far as possible the drawbacks currently deriving from the craftsman construction of said fixing units.

in detail, the object of the present invention is to provide a fixing unit which, substantially, is:
- versatile in that it can be easily used for both types of lifting device;
- of easy installation in that it can be applied without difficulty even to frames in which the distance between the longitudinal members does not correspond to the scheduled nominal distance;
- economical in that it is formed by the combination of a relatively small number of parts which are of simple structure and are usable for both the aforesaid types of lifting device. These objects are attained by a fixing unit in accordance with claim 1, to which reference should be made for brevity.

The invention is illustrated by way of non-limited example in the figures of the accompanying drawings, which show four possible embodiments thereof. The first and second embodiment relate to fixing units usable in lifting devices with a one-piece platform. The third and fourth embodiment relate to fixing units usable in lifting devices with a folding platform.

Figure 1 is a view of a first embodiment of the fixing unit interposed between the beam (of square cross-section) of the lifting device and the vehicle frame longitudinal members (of I-shape) which, with respect to the travelling direction of said vehicle, it is convenient to define as lateral.

Figure 2 is a section on the line II-II of Figure 1.

Figure 3 is a view of a second embodiment of the fixing unit interposed between the beam (of circular cross-section) of the lifting device and the vehicle frame longitudinal members (of I-shape) which, with respect to the travelling direction of said vehicle, it is convenient to define as lateral.

Figure 4 is a section on the line IV-IV of Figure 3.

Figure 5 is a section corresponding to Figure 2 but showing a third embodiment of the fixing unit.

Figure 6 is a section corresponding to Figure 4 but showing a fourth embodiment of the fixing unit.

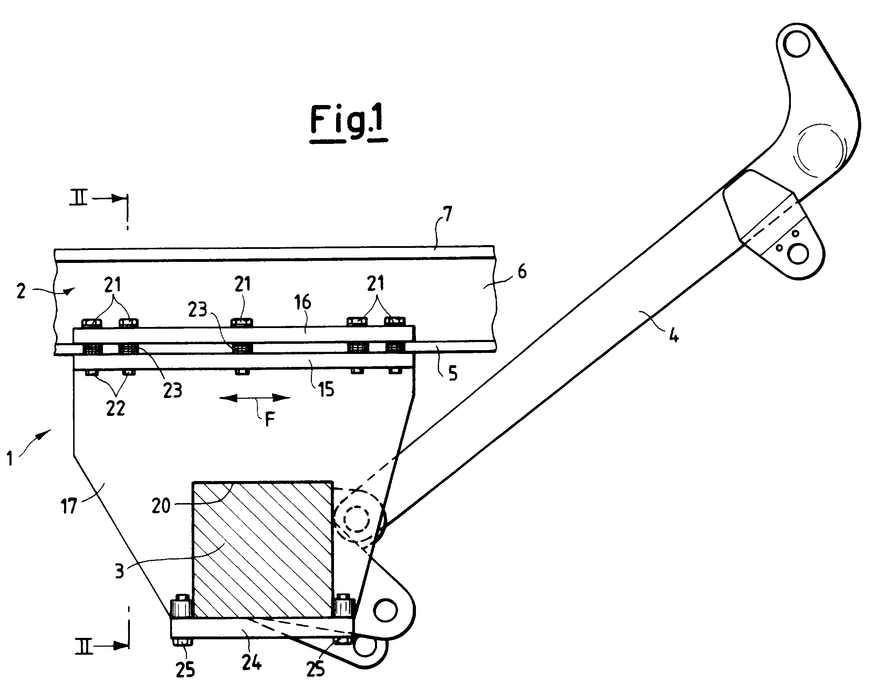

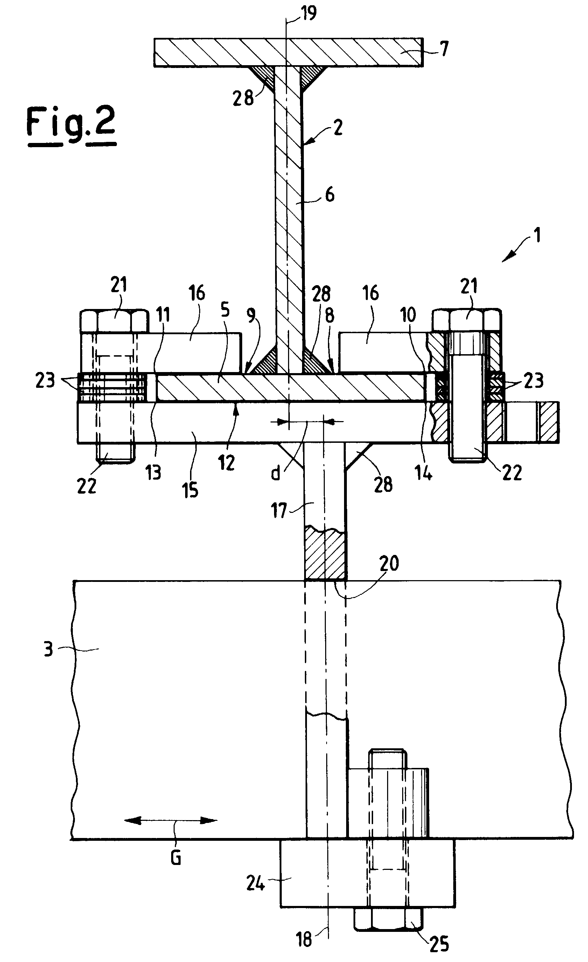

With reference to said figures, and in particular to Figures 1 and 2, the fixing unit, indicated overall by 1, is to be interposed (for connection purposes) between the longitudinal members 2 of the frame (this latter being only partially visible) and the beam 3 of the lifting device (this latter being only partly visible).

The lifting device is of the type comprising a beam 3 of parallelogram cross-section (in the illustrated embodiment the beam 3 is square). It supports the linkages and actuators of the lifting device. In Figure 1 only an arm indicated by 4 is visible.

The longitudinal members 2 of the vehicle frame are preferably of structural I-shaped type, and hence comprise at least one lower flat horizontal portion 5 fixed along its centre line to the remaining parts of the structural shape 6 and 7, to create a pair of upper surfaces 8 and 9 respectively bounded externally by upper parallel edges 10 and 11, and a lower surface 12 bounded by lower parallel longitudinal edges 13 and 14.

For each shaped longitudinal member 2 of the frame, the fixing unit 1 comprises a connection element 15, 17 which itself comprises:
- upperly an upper flange 15 fixable to the lower flat horizontal portion 5 of the longitudinal member 2 in such a manner as to face the lower surface 12 of said lower flat horizontal portion 5 by the action of a pair of opposing upper gibs 16 which face the pair of upper surfaces 8 and 9 of said lower flat horizontal portion 5;
- centrally an intermediate flat flange 17 fixed perpendicularly to the upper flange 15 such that the plane of symmetry 18 of said intermediate flat flange 17 is spaced from the axis of symmetry 19 of the shaped longitudinal member 2 by a distance d which can be varied by securing the fixing unit in a position rotated through 180° about the plane 18;
- lowerly a concave housing 20 arranged to house the beam 3 for supporting the linkages and actuators and means for locking said beam in a desired position.

The upper flange 15 is connected to the pair of opposing upper gibs 16 by upper screws 21, on the shank of which there is provided at least one upper spacer 23. In the illustrated embodiment a plurality of spacers 23 of various thicknesses are provided, their total thickness being such that the flat horizontal portion 5 of the longitudinal member 2 is, in this case, locked rigidly between the pair of opposing upper gibs 16 and the upper flange 15 of said connection element 15, 17.

The concave housing is in the shape of a parallelogram, the means for locking the beam 3 comprising a lower gib 24 fixed at its ends to the connection element 15, 17 by lower screws or bolts 25.

During assembly, the intermediate flat flange 17 can be positioned in two positions rotated through 180° about the plane 18 to obtain a distance d which better compensates any errors in the distance between the axes of the frame longitudinal members 2. The position of the upper flange 15 relative to the lower flat horizontal portion 5 can also be varied in the horizontal direction. Before tightening the upper screws 21 the position of the fixing unit 1 on the longitudinal members 2 can be adjusted in the direction of the arrows F. Finally, before tightening the lower screws the position of the beam 3 relative to the fixing unit 1 or relative to the longitudinal members 2 can be adjusted in the direction of the arrows G.

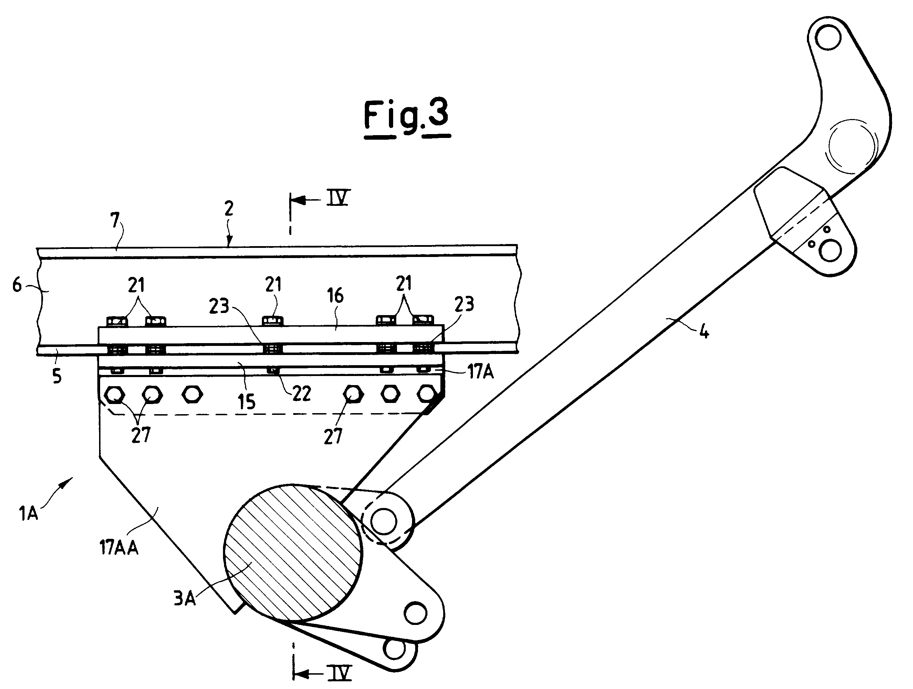

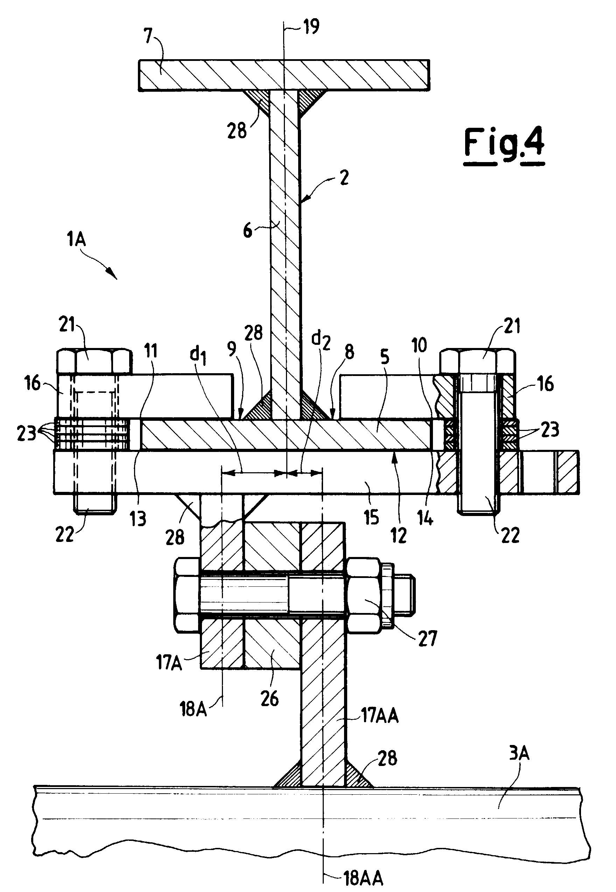

With particular reference to Figures 3 and 4, the second embodiment of the fixing unit, indicated overall by 1A, differs from the preceding as follows. The connection element, or rather the intermediate flange 17, is formed in two parallel portions 17A and 17AA connected together in such a manner that the planes 18A, 18AA in which each portion 17A and 17AA lies are positioned in the best possible manner about the axis of symmetry 19 of the shaped longitudinal member 2. Between the two parallel portions 17A and 17AA there is interposed at least one lower spacer 26. By varying the size of said lower spacer 26 (which could be formed in several portions of different thicknesses) the distances d1 and d2 of the planes 18A and 18AA from the axis of symmetry 19 can be further varied. The distances d1 and d2 are fixed by the person who fits the lifting device to the vehicle on the basis of the applicable technical situation. The two parallel portions 17A and 17AA are fixed together by intermediate screw means 27. The means for locking the beam 3A (which in this case is of circular cross-section) are weld seams 28.

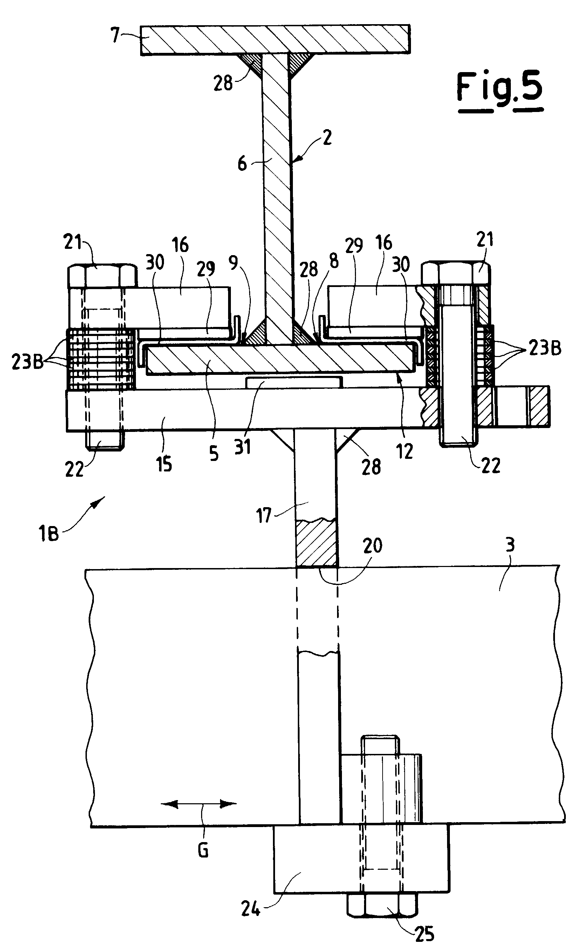

With particular reference to Figure 5, the fixing unit of the third embodiment, indicated overall by 1B, differs from the fixing unit 1 of the first embodiment as follows. Upper pads 29 of self-lubricating and/or low friction coefficient material are interposed between each pair of upper gibs 16 and the pair of upper surfaces 8 and 9 of the lower flat horizontal portion 5 of the longitudinal member 2 and are slidable on metal tracks 30 and/or directly on the surfaces 8 and/or 9. Between the lower surface 12 of the lower horizontal flat portion 5 of the longitudinal member and the upper flange 15 of the connection element there is interposed at least one lower pad 31 of preferably self-lubricating material. In this manner the connection element can move continuously in a direction parallel to the longitudinal members 2 (arrows F in Figure 1), as is necessary to enable the device to emerge so as to be able to unfold the platform and use it for lifting goods and/or persons.

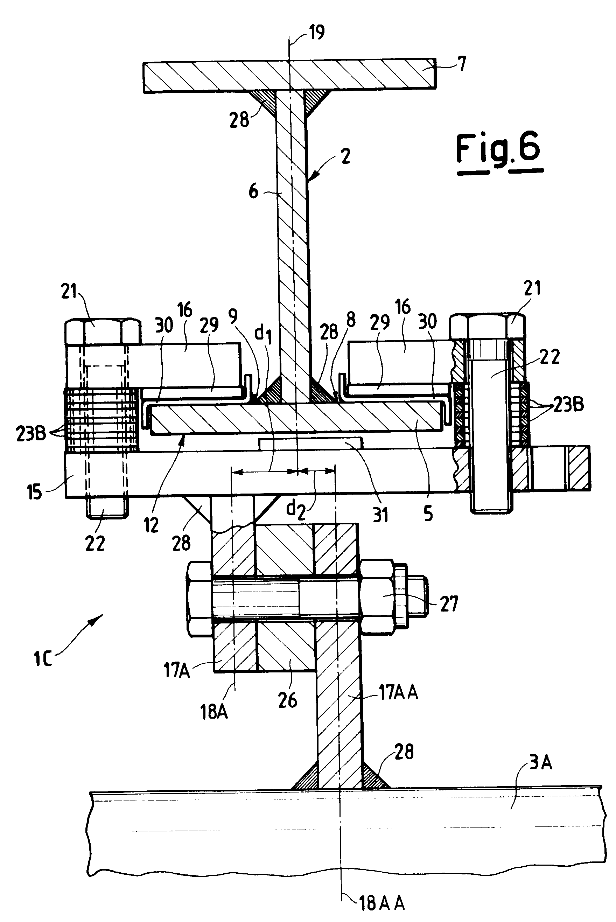

With particular reference to Figure 6, the fixing unit of the fourth embodiment, indicated overall by 1C, differs from the fixing unit 1B of the third embodiment as follows.

The connection element, or rather the intermediate flange 17, is formed in two parallel portions 17A and 17AA connected together such that the planes 18A, 18AA in which each portion 17A and 17AA lies are positioned in the best possible manner about the axis of symmetry 19 of the shaped longitudinal member 2. Between the two parallel portions 17A and 17AA there is interposed at least one lower spacer 26. By varying the size of said lower spacer 26 (which could be formed in several portions of different thicknesses) the distances d1 and d2 of the planes 18A and 18AA from the axis of symmetry 19 can be further varied. The distances d1 and d2 are fixed by the person who fits the lifting device to the vehicle, enabling him to take account of the applicable technical situation, for example the actual levels involved, or by how much the actual levels differ from the nominal levels. The two parallel portions 17A and 17AA are fixed together by intermediate screw means 27. The means for locking the beam 3A (which in this case is of circular cross-section) are weld seams 28.

In all the described cases, the position of the upper flange 15 in the horizontal direction relative to the lower horizontal flat portion 5 can also be achieved by the upper spacers 23 and 23B, which for this purpose are eccentrically bored. The upper spacers 23 and 23B can hence form fine positioning elements or lateral guide elements for the said upper flange 15 relative to the lower horizontal flat portion 5.

## Claims

1. A fixing unit for a lifting device applicable to the rear of the longitudinal members (2) of a vehicle frame, in which:
- said lifting device is of the type comprising a beam (3, 3A) for supporting the relative linkages and actuators,
- said longitudinal members (2) are of the structural shape type and comprise at least one lower flat horizontal portion (5) which is fixed along its centre line to the remaining parts (6, 7) of the shaped longitudinal member (2), to create a pair of upper surfaces (8, 9) bounded externally by upper parallel edges (10, 11), and a lower surface (12) bounded by lower parallel longitudinal edges (13, 14),
characterised by comprising, for each shaped longitudinal member (2) of the frame, a connection element (15, 17) comprising:
- upperly an upper flange (15) fixable to the lower flat horizontal portion (5) of the longitudinal member (2) in such a manner as to face the lower surface (12) of said lower flat horizontal portion (5), by a pair of opposing upper gibs (16) which face the pair of upper surfaces (8, 9) of said lower flat horizontal portion (5);
- centrally an intermediate flat flange (17, 17A, 17AA) fixed perpendicularly to the upper flange (15) such that the plane of symmetry (18, 18A, 18AA) of said intermediate flat flange (17, 17A, 17AA)) is spaced from the axis of symmetry (19) of the shaped longitudinal member (2) by a desired distance (d);
- lowerly a concave housing (20) arranged to house said beam (3) for supporting the linkages and actuators and means (24-25, 28) for locking said beam (3, 3A) in a desired position.

2. A fixing unit as claimed in the preceding claim, characterised in that the upper flange (15) is connected to the pair of opposing upper gibs (16) by upper screws (21), on the shank (22) of which there is provided at least one upper spacer (23).

3. A fixing unit as claimed in claim 1 and/or 2,
characterised in that:
- the lower flat horizontal portion (5) of the longitudinal member (2) can be locked rigidly between the pair of opposing upper gibs (16) and the upper flange (15) of said connection element (15, 17);
- the concave housing (20) is of parallelogram shape, the beam locking means comprising a lower gib (24) fixed at its ends to the connection element (15, 17).

4. A fixing unit as claimed in claim 1 and/or 2,
characterised in that the connection element (15, 17) or rather the intermediate flat flange of said connection element is formed in two parallel portions (17A, 17B) connected together such that the planes (18A, 18AA) in which each portion lies need not coincide with the axis of symmetry (19) of the shaped longitudinal member (2).

5. A fixing unit as claimed in claim 4, characterised in that:
- between the two parallel portions (17A, 17AA) of the intermediate flat flange there is interposed at least one lower spacer (26);
- the two parallel portions (17A, 17AA) are connected together by screw means (27);
- the means for locking said beam (3A) are preferably weld seams.

6. A fixing unit as claimed in claim 1, characterised in that the upper spacers (23B) mounted about the upper screws (21) are bored eccentrically so as to form fine positioning or lateral guide elements.

7. A fixing unit as claimed in claim 1 and/or 6,
characterised in that:
- the concave housing (20) is of parallelogram shape, the beam locking means comprising a lower gib (24) fixed at its ends to the connection element (15, 17);
- upper pads (29) of self-lubricating and/or low friction coefficient material are interposed between each pair of upper gibs (16) and the pair of upper surfaces (8, 9) of the lower flat horizontal portion (5) of the longitudinal member (2) and are slidable on metal tracks (30) and/or directly on at least one of the surfaces (8, 9);
- between the lower surface (12) of the lower horizontal flat portion (5) of the longitudinal member (2) and the upper flange (15) of the connection element (15, 17) there can be interposed at least one lower pad (31) of self-lubricating and/or low friction coefficient material;
so that the connection element (15, 17) can move in a direction parallel to the longitudinal members (2) (arrows F).

8. A fixing unit as claimed in claim 1 and/or 6,
characterised in that:
- the concave housing (20) is of circular shape and the means for locking the beam (3A) are weld seams (28);
- the connection element (15, 17) or rather the intermediate flat flange of said connection element is formed in two parallel portions (17A, 17B) connected together such that the planes (18A, 18AA) in which each portion lies do not coincide with the axis of symmetry (19) of the shaped longitudinal member (2);
- upper pads (29) of self-lubricating and/or low friction coefficient material are interposed between each pair of upper gibs (16) and the pair of upper surfaces (8, 9) of the lower flat horizontal portion (5) of the longitudinal member (2), and are slidable on metal tracks (30) and/or directly on at least one of the surfaces (8, 9);
- between the lower surface (12) of the lower horizontal flat portion (5) of the longitudinal member (2) and the upper flange (15) of the connection element (15, 17) there is interposed at least one lower pad (31) of self-lubricating and/or low friction coefficient material;
so that the connection element (15, 17) can move in a direction parallel to the longitudinal members (2) (arrow F).

9. A fixing unit as claimed in claim 8, characterised in that:
- between the two parallel portions (17A, 17AA) there can be interposed at least one lower spacer (26), they being connected together by screw means (27).
